Europäisches Patentamt

(19) European Patent Office

Office européen des brevets

(11) Veröffentlichungsnummer: **0 008 713**
**B1**

(12) **EUROPÄISCHE PATENTSCHRIFT**

(45) Veröffentlichungstag der Patentschrift:
**12.01.83**

(51) Int. Cl.³: **E 04 B 1/58,** F 16 B 7/22

(21) Anmeldenummer: **79102960.6**

(22) Anmeldetag: **14.08.79**

(54) Verbindung für zusammenfügbare Skelettkonstruktionen.

(30) Priorität: **31.08.78 DE 2838053**

(43) Veröffentlichungstag der Anmeldung:
**19.03.80 Patentblatt 80/6**

(45) Bekanntmachung des Hinweises auf die Patenterteilung:
**12.01.83 Patentblatt 83/2**

(84) Benannte Vertragsstaaten:
**CH FR GB NL SE**

(56) Entgegenhaltungen:
**CH-A-500 349**
**FR-A-1 165 379**

(73) Patentinhaber: **STREIF AG, D-5461 Vettelschoss über Linz/Rhein (DE)**

(72) Erfinder: **Meickl, Gerhard, Dipl.-Ing., Bergstrasse 13, D-5461 Ockenfels (DE)**

(74) Vertreter: **Tiedtke, Harro, Dipl.-Ing. et al, Patentanwaltsbüro Tiedtke-Bühling-Kinne-Grupe-Pellmann Bavariaring 4, D-8000 München 2 (DE)**

## Verbindung für zusammenfügbare Skelettkonstruktionen

Gegenstand der Erfindung ist die Verbindung von Bauteilen für zusammenfügbare Skelettkonstruktionen in einheitlicher und Mischbauweise mittels lotrecht stehender Platten mit den im Oberbegriff der Ansprüche 1 und 2 genannten Merkmalen.

Im Skelettbau müssen horizontale Träger aus unterschiedlichen Richtungen in einer Ebene an einer Stütze angeschlossen werden. Namentlich im Holzbau müssen die Kräfte nach den herkömmlichen Fachwerk-, Riegel- oder Zangenbauweisen vielfach indirekt in die Stützen eingeleitet werden, wobei zusätzliche Beanspruchungen in den Bauteilen erzeugt werden, nur weil es aus räumlichen Gründen konstruktiv nicht gelingt, die Kräfte in die Stütze direkt einzutragen. Der Holzbau ist ersatzweise für alle übrigen Bauweisen prädestiniert, die grossen Schwierigkeiten bei Skelettkonstruktionen besonders aus vorgefertigten Einheiten aufzuzeigen.

In der Regel sind wegen der Anschlüsse mehrteilige Querschnitte erforderlich, die Anschluss- und Abdichtungsprobleme am gesamten Ausbau nach sich ziehen. Schwinden und Quellen der Hölzer bewirken Formänderungen, welche die Masshaltigkeit unerwünscht beeinflussen und dadurch an den Ausbau ebenfalls schwer erfüllbare Forderungen der Abdichtung stellen.

Trägerlagen in verschiedener Richtung lassen sich nur übereinander anordnen mit dem Nachteil, dass im Zuge des Ausbaus Probleme auftreten.

Im klassischen Holzbau wurden Riegel mittels Zapfen im Zapfenloch der Stütze angeschlossen und mit Holznägeln zugfest gesichert. Durch die Schwächung im Anschluss wurden unwirtschaftlich grosse Holzquerschnitte erforderlich.

Die heutigen Verbindungsmittel müssen am Bauwerk eingebaut werden und sind dadurch montageaufwendig. Mitunter müssen die Querschnitte der Träger nur deswegen grösser gewählt werden, um die Verbindungsmittel am Lasteintragungspunkt unterbringen zu können. Dies führt ebenfalls zu unwirtschaftlichen Lösungen, da mehr Holz verbraucht werden muss, als eigentlich auf Grund der Belastung notwendig ist. Dies gilt im selben Masse für die Trägerauflagerung durch Kontakt quer zur Faser.

Es sind Auflagerschuhe aus Blech entwickelt worden, welche an Trägern oder Stützen befestigt werden (DE-A-2 622 843 und DE-A-2 611 236) und als Auflager für Riegel dienen. Dergleichen Auflagerschuhe sind nur im begrenzten Umfang in der Lage, Lasten abzutragen, weil die Verbindungsmittel einschnittig und durch die exzentrische Lasteinleitung auch auf Herausziehen beansprucht werden.

In der Literatur sind auch Beschläge in Form von Stahllaschen bekanntgeworden, die seitlich am Trägerende befestigt werden und mit zwei auskragenden Haken in Löcher von Stützen eingreifen (DE-A-2 166 879). Dergleichen Beschläge setzen voraus, dass die Stütze einen Metallquerschnitt besitzt, der die hohen Pressungen im Haken aufnimmt. Im Möbelbau finden ähnliche Beschläge, vorzugsweise bei Betten, Verwendung, deren Seitenwände stirnseitig in aufgeschraubte, gelochte Blechbeschläge eingreifen. Die Tragfähigkeit derartiger Verbindungen ist jedoch sehr begrenzt, sowohl durch die Pressungen im Haken als auch durch die geringe Tragfähigkeit der Befestigungsmittel für die Beschläge. Holzträger an Holzstützen auf derartige Weise anzuschliessen, scheitert daran, dass die Befestigungsmittel nicht aufnehmbare Herausziehbeanspruchung erfahren.

Alle aussenseitig angebrachten Beschlagteile erfüllen nicht die Forderungen des Brandschutzes der Feuerwiderstandsklasse F 30.

Die Entwicklung führte zu Knotenplatten, mit deren Hilfe mehrere Stäbe aus unterschiedlichen Richtungen einer Ebene zusammengefügt werden. Bei den bekannten Knotenplatten werden die angeschlossenen Bauteile miteinander verlascht. Die durchgehenden Platten müssen an Ort montiert und kraftschlüssig angeschlossen werden. Die De- und Remontage ist nicht möglich oder mit Materialzerstörung verbunden.

Die italienische Patentschrift 566 424 stellt eine Trägerstossverbindung unter Schutz, bei welcher die im lotrechten stirnseitigen Schlitz eine Platte eingelassen ist, mit einem vorstehenden hakenförmigen Ende. Im Schlitz eines anderen Trägers ist ein Bolzen waagrecht angeordnet, in welchen die Hakenbeuge der Platte des ersten Trägers sich einhängt. Die Tragfähigkeit dieser Verbindung ist durch den Bolzendurchmesser und die Vorholzlänge begrenzt.

In der schweizer Patentschrift 500 349 hängen sich zwei im rechten Winkel zueinander stehende Träger mit den korrespondierenden vorstehenden Haken ineinander ein und stützen sich auf die darunterliegende, ineinander verhakte rechtwinklige Trägerverbindung ab. Die Platten müssen relativ dick sein, um die konzentriert angreifenden Lasten untereinander und schliesslich in den Stützenkopf auf das Stirnholz durch Kontakt eintragen zu können, was eine unerwünschte Querschnittsschwächung nach sich zieht. Auch diese Verbindung lässt sich nicht so ausbilden, dass über die Verbindungsteile die volle Traglast der Bauteile übertragen werden kann. Bei beiden Lösungen ist die Verbindung das schwächste Teil.

Abgesehen davon werden bei horizontalen, zugbeanspruchten Trägern Spaltkräfte im Stützenkopf erzeugt, die von Holzstützen nicht aufgenommen werden können.

Alle aufgeführten Holzverbindungen haben nachfolgende Nachteile gemeinsam:
– Hoher Montageaufwand vor Ort;
– Gefahr der Beschädigung der Holzteile beim Eintreiben der Befestigungsmittel, besonders bei Stabdübeln;

– Durch Schwinden treten die Konstruktion beeinflussende Massänderungen und Zwängungen auf;

– Gestörter Kraftfluss und Zusatzbeanspruchungen durch Ausmittigkeiten;

– Problematischer Ausbau, z.B. Wandanschluss, wenn Nebenträger ausserhalb der Ebene Stütze – Hauptträger angeschlossen werden.

Die Skelettbauweise wird erst wirtschaftlich durch eine rationelle Montage, die insbesondere geeignet sein muss für Konstruktionen aus Holz mit orthogonalen Trägersystemen in Rasterbauweise. Für industriell gefertigte Bauteile lässt sich die erreichbare Massgenauigkeit aber nur dann auf die daraus herzustellende Baukonstruktion übertragen, wenn es gelingt, auch die Verbindungen massgenau herzustellen und sie so auszubilden, dass sie für die Dimensionierung der Träger und Stützen nicht mehr massgebend sind. Allgemeine Aufgabe der Erfindung ist mithin auch, die Verbindung so zu gestalten, dass für die Tragfähigkeit des Systems allein die Trägerdimensionierung, das Feldmoment bzw. die Durchbiegung bzw. die Querschnitte der Stützen massgebend bleiben.

Die neuartige Verbindung muss darüber hinaus auch der Forderung eines vorgefertigten massgenauen Skelettbaus Rechnung tragen, dass die bei Holz unvermeidlichen Schwindverformungen insbesondere quer zur Faser beim Anschluss von Stirnholz zu Querholz keinen Einfluss auf die Tragfähigkeit der Konstruktion nehmen, insbesondere keine zusätzlichen Zwängungen verursachen. An die Verbindung wird ferner die Forderung gestellt, dass sie einen hohen Vorfertigungsgrad besitzt und im Werk vollständig in die Bauteile eingebaut werden kann, so dass auf der Baustelle das Setzen von Verbindungsmitteln nahezu entfällt. Das Herstellen des Skeletts auf der Baustelle muss sich auf das Zusammenfügen massgerechter Bauteile beschränken. Die Verbindung der Bauteile darf keine zusätzlichen Massabweichungen im System erzeugen, so dass es zur Verbesserung der Masshaltigkeit im System kommt. Grobe Abweichungen auf der Baustelle muss die Erfindung vermeiden und zumindest denselben Feuerwiderstand besitzen wie die Bauteile selbst.

Bei der aus der CH-A-500 349 bekannten Verbindung der im Oberbegriff des Patentanspruchs 1 angegebenen Art greifen jeweils über Eck angeordnete Träger mit Haken ineinander. Es ist unklar, wie horizontale Kräfte in die Stütze eingeleitet werden, da Spaltkräfte auf dem Stützenkopf entstehen.

Die Behebung dieser Nachteile führt zu folgender spezieller Aufgabe:

Es soll eine Verbindung geschaffen werden, bei welcher der Träger die Lasten in genau definierten Flächen abgibt. Die querkraftübertragende Auflagerfläche muss ausreichend und passgerecht ausgeführt werden. Die Lastaufnahmemöglichkeit soll nicht durch die Kontaktfläche im Holz begrenzt werden, sondern durch eine beliebige Anzahl von Verbindungsmitteln erhöht werden können. Ebenso sind zur Aufnahme der Zugkräfte für in einer Ebene liegende Bauteile Anlageflächen in der Weise zu schaffen, dass keine Spaltzugkräfte im Bauteil entstehen. Die in einer Ebene liegenden Bauteile müssen ferner ihre Druckkräfte ebenso einwandfrei wie sicher abtragen können. Ausserdem sollen je nach Bedarf in einer horizontalen Ebene 1, 2, 3 oder 4 Träger mit gleich ausgebildeten Trägerenden an einer Stütze angeschlossen werden können.

Die Lösung dieser Aufgabe besteht in den zwei unabhängigen Varianten der erfindungsgemässen Verbindung nach den kennzeichnenden Teilen der Ansprüche 1 und 2.

Weitere vorteilhafte Ausgestaltungen der Erfindung sind in den abhängigen Ansprüchen 3 bis 20 genannt.

In der folgenden Beschreibung sind für Teile derselben Funktion die gleichen Bezugszeichen verwendet. Zur Kennzeichnung des Plattentyps werden Grossbuchstaben verwendet, und zwar:

A für die lastabgebenden Platten,

B für die als Widerlager der Platte A dienenden Platten,

D für eine Platte zur Stossverbindung von Stützen und Verriegelung eines Knotens.

Zur Kennzeichnung zusätzlicher Funktionsmerkmale bedeuten:

L Lasche zur zugfesten Verbindung von Stützen,

V höhenversetzte Anordnung von Platte B,

E die Auflagerplatte B besitzt eine zusätzliche vertikale Berührfläche für den Haken der Platte A, dadurch fähig, horizontale Druckkräfte und Momente aufzunehmen,

S zusätzlicher Schlitz in der Auflagerplatte B zur kreuzweisen Ineinanderfügung,

O Schlitzanordnung oben,

U Schlitzanordnung unten.

Zahlen drücken in Verbindung mit Grossbuchstaben die Anzahl an Widerlagern einer Platte aus.

Das besondere Merkmal der Platte A liegt darin, dass ihr hakenförmiger Fortsatz in die korrespondierende Ausklinkung der Platte B hineinpasst, so, dass die horizontale Fläche 1 des Hakenendes querkraftübertragende Kontaktfläche ist und auf der vertikalen Anlagefläche 2 auf der Hakeninnenseite Zugkräfte, auf der vertikalen Anlagefläche 3 Druckkräfte übertragen werden. Durch die Kombination zweier senkrechter Anlageflächen 2 und 3 auch in Verbindung mit einer geneigten Fläche, ist bei entsprechender Masshaltigkeit in der Ausklinkung und dem Hakenende ein Einspannmoment übertragbar. Die Platten A, B und D werden in den Holzbauteilen mit Leim, Nägeln, Stabdübeln, Bolzen, eingeleimten Schrauben u.dgl. befestigt. Die Abmessungen der Platten sind auf die Beanspruchung abgestimmt. Die Beanspruchung bestimmt auch die Abmessungen der Skelettbauteile, so dass querschnittsbezogene Standardplatten standardisiert werden können.

Für die geometrische Ausbildung der Platten A und B sind die am Anschluss auftretenden Kräfte massgebend. Eine Optimierung wird dann erzielt, wenn beispielsweise der Schwerpunkt der Auflagerfläche 1 über dem Verbindungsmittel in der Platte B angeordnet wird. Dadurch wird die Beanspruchung der Verbindungsmittel in der Platte B, wenn diese so nahe wie möglich an den Rand des Bauteils gelegt werden, minimiert.

Die Ausgestaltung der Trägerenden in Form und Funktion der Platte A macht die Befestigung einer eigenen Platte von Fall zu Fall überflüssig.

Weitere Vorteile und Merkmale der Erfindung ergeben sich aus der nachfolgenden Beschreibung an Hand der beiliegenden Zeichnungen. Es zeigt:

Fig. 1 Ausführungsbeispiele ohne Anspruch auf Vollständigkeit für die Platten A, B und D in isometrischer Darstellung,

Fig. 2 den Anschluss eines Trägers 4 an eine Stütze 5 mit Hilfe der Platte A und B1, die sich in der horizontalen Auflagerfläche 1 und der Anlagefläche 2 berühren, zur Gabellagerung des Trägers 4 B1 den Plattenüberstand c besitzt und das Dübelpaar 6 unter dem Schwerpunkt von 1 axialsymmetrisch mit Dübelpaar 7 angeordnet ist,

Fig. 3 die Trägerstützenverbindung der Fig. 2 in isometrischer Darstellung, mit der in den Stützenkopf eingeschlitzten Nut 10,

Fig. 4 den symmetrischen Anschluss zweier Träger 4 an einer Stütze 5 mit Hilfe der Platte B2,

Fig. 5 in isometrischer Darstellung den Anschluss von vier Trägern 4 mit unterschiedlicher Trägerhöhe an einem Stützenkopf 5 mit Hilfe einer kreuzförmigen Platte B4 und Platte A so, dass alle Trägeroberkanten in einer Ebene liegen, wodurch ein orthogonales Skelettsystem erst möglich wird,

Fig. 6 die isometrische Darstellung einer dreischenkligen Platte B3,

Fig. 7 den Grundriss eines Anschlusses von drei Trägern 4 in einer Ebene an eine Stütze mit Hilfe der Platte B3, deren Schenkel die Anschlusswinkel $\alpha_1$, $\alpha_2$, $\alpha_3$ besitzen,

Fig. 8 einen Stützenkopf mit Hilfe einer Béschlagplatte B4L, welche im Stützenkopf 5 eingelassen und befestigt ist und in Verbindung mit Platte D des Stützenfusses eine zugfeste Verbindung der Stützen und gleichzeitige Verriegelung des Knotens herzustellen erlaubt,

Fig. 9 den Stützenfuss aus Fig. 8 in isometrischer Darstellung mit der breiteren Nut 10, in welche die lastverteilende Platte D eingesetzt ist und der Kreuznut 11 mit dem Verriegelungsbolzen 12 und Sicherungsstift 13,

Fig. 10 die Ansicht eines Kreuzknotens, deren Trägerebene einen Winkel $\beta$ zur Achse der Stütze einnimmt, unter Verwendung der Platte B4V, deren Teile entsprechend der Neigung der Trägerebene zueinander höhenversetzt sind,

Fig. 11 die Ansicht einer durchgehenden Stütze 5 mit zwei Trägern 4, in deren Stirnseiten die Platten A befestigt sind, welche in die Platte B2E eingreifen,

Fig. 12 eine isometrische Darstellung einer Platte B4E, welche eingetiefte Auflagerflächen 1 besitzen, wodurch in den daran anschliessenden vertikalen Anlageflächen 3 horizontale Druck- und in 2 horizontale Zugkräfte direkt in die Platte B4E übertragen werden,

Fig. 13 den Einbau einer aus Platten B2SO und B2SU bestehenden Kreuzplatte in eine durchgehende Stütze in isometrischer Darstellung,

Fig. 14 die Ansicht eines Kreuzknotens mit der Widerlagerplatte B4, die zusätzlich eine Sicherung gegen Abheben besitzt, in Form eines mit der Kreuzplatte B4 verbundenen Bolzens 17 Klemmteile 18 beispielsweise als Kreuzstück in die Fuge der Kreuzschlitze passend ausgeführt, und Mutter 19,

Fig. 15 die isometrische Darstellung der Widerlagerplatte B4 mit einer Abhebsicherung 17, 18, 19 für die Träger, wahlweise in Form der in Fig. 14 eingebauten,

Fig. 16 die Ansicht des Anschlusses an einen auskragenden oder durchlaufenden Träger 20 mit Hilfe einer übergestülpten Stahllasche 21, beispielsweise befestigt mit Bolzen 22 mit angeschweissten Platten B1, die zur Sicherung gegen Abheben des Trägers eine Steckbolzenbohrung 23 besitzen,

Fig. 17 in isometrischer Darstellung die übergestülpte Stahllasche 21 nach Fig. 16,

Fig. 18 die Verwendung von Platten A in einem Träger und B1 in einem in gleicher Richtung laufenden zweiten Träger zur Herstellung eines Gerbergelenks bei einem Trägerstoss.

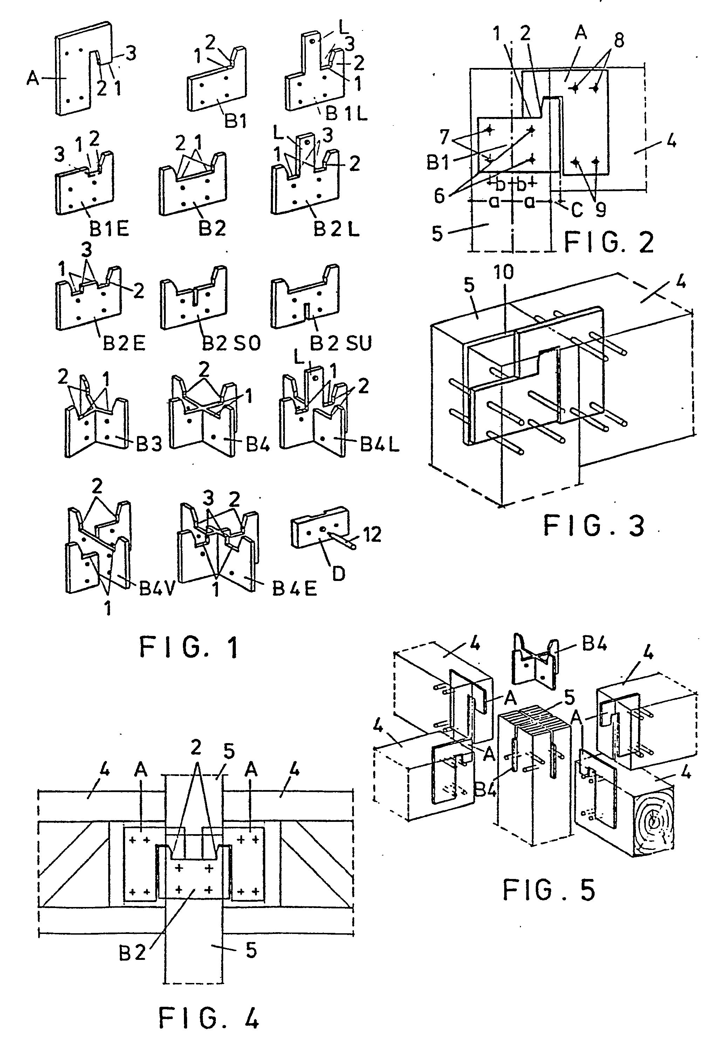

In Fig. 1 sind einige Beispiele für Formteile dargestellt.

Zum besseren Verständnis sind in Fig. 2 und 3 der Einbau der Platten in den Träger 4 und die Stützen 5 an einem einfachen Beispiel eines Einzelträgers erläutert.

Entsprechend der aufzunehmenden Kräfte wird die Platte B1 so in den Stützenkopf eingedübelt, dass das Dübelpaar 6 den kleinstmöglichen Randabstand erhält. Stützenachsensymmetrisch angeordnet wird dann das Paar 7. Ein Vorsprung c der Dübelplatte B1 gegenüber der Stützenoberfläche wird vorgesehen. Analog hierzu errechnet sich die Tiefe des Schlitzes in der Trägerstirnseite, in welche die Platte A eingesetzt werden muss. Bei einer derartigen Vorgehensweise, nämlich der, dass das Dübelpaar 6 seiner Grösse entsprechend die randnaheste Lage einnimmt, ist deren Beanspruchung am kleinsten. Gleichzeitig aber auch die Beanspruchung der Platte A, da deren Kragmoment von den Dübelpaaren 8 und 9 aufgenommen werden muss. Zur Verbesserung des Feuerwiderstandes und günstigeren Kraftflusses wird die Nut 10 vorzugsweise mittig in den Stützenkopf eingeschlitzt. Das schliesst jedoch nicht aus, dass auch aussermittige Anschlüsse oder achssymmetrische mit zwei und mehr Platten ausgeführt werden.

Nach massgerechtem Einbau der Platten B1 und A, was bei industrieller Fertigung vorausgesetzt werden darf, wird in zusammengebautem Zustand die Querkraft der Auflagerfläche 1 von der Platte A auf die Platte B übertragen. Die vertikale Anlagefläche 2 dient dazu, horizontale Zugkräfte zu übertragen, aber auch gleichzeitig beim Zusammenbau einen möglichst satten Anschluss des Trägers 4 an die Stütze 5 durch den Anzug zu erreichen, ohne dass abhebende Kräfte für den Träger 4 wirksam werden, weil die Neigung auf die Rauhigkeit und den Reibungswinkel der Berührflächen abgestimmt ist. Andere Ausbildungen der Fläche 2 etwa in einer stetig gekrümmten oder einer gebrochenen Fläche sind von Fall zu Fall zweckmässig. Dadurch, dass die Platte B1 auf der Tiefe c durch den Überstand in die Nut des Trägers 4 eingreift, ist der Anschluss auch gleichzeitig verwindungssteif.

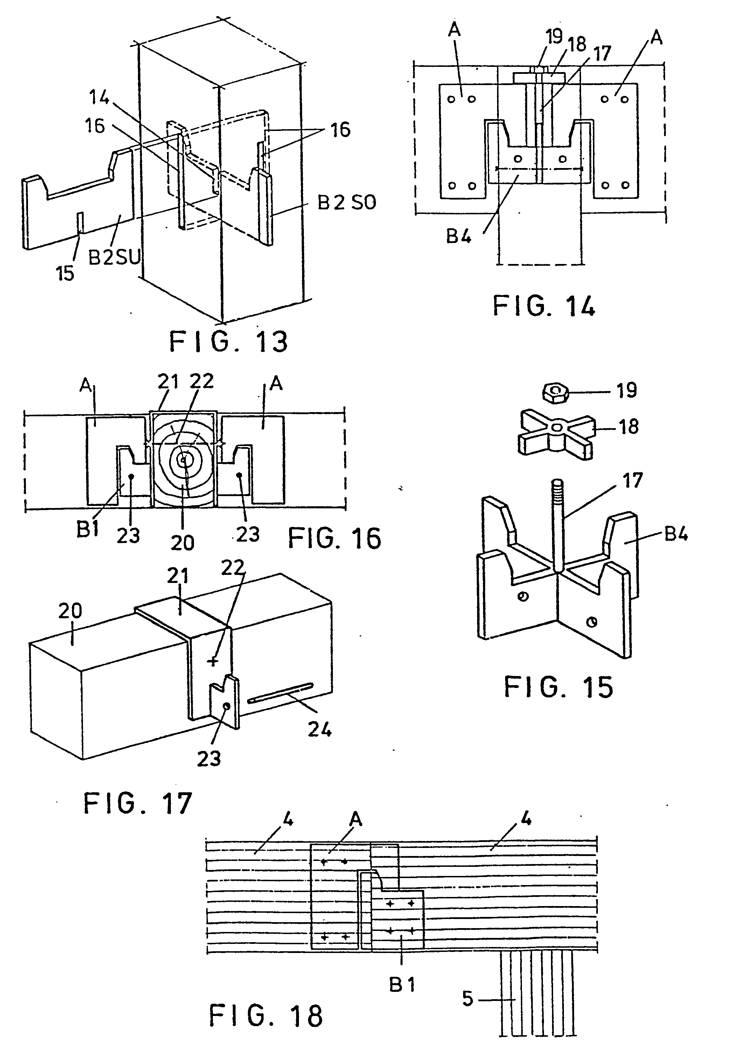

Bei dem in Bild 4 dargestellten Anschluss zweier sich gegenüberliegender Gitterträger 4 an einer Stütze 5 findet eine Platte B2 mit symmetrischer Ausklinkung Verwendung. Die vertikalen Anlageflächen 2 übertragen horizontale Zugkräfte. Die Anzugfläche stellt sicher, dass bei der Montage die Träger 4 ohne klaffende Fuge an die Stütze 5 herangezogen werden, massgerechte Montage der Platte A vorausgesetzt. Sowohl die Platte A als auch B2 sind so dimensioniert, dass sie unabsichtige Einspannmomente ohne Schaden aufnehmen können. Sie lassen sich im Bedarfsfall aber auch so ausbilden und dimensionieren, dass der Haken der Platte A zusammen mit der Kontaktfläche zwischen Untergurt und Stütze ein Kräftepaar aufnimmt, also Einspannung oder Teileinspannung des Trägers 4 an Stütze 5 erfolgt. Eine Kombination von vertikalen Anlageflächen 3 mit vertikalen Anlageflächen 2, wie in Fig. 1 und Fig. 13 am Beispiel B4E dargestellt, ist in der Lage, auch Momente zu übertragen, wenn nur die Masstoleranzen klein genug sind.

In der isometrischen Darstellung eines Kreuzungspunktes von vier Trägern und deren Anschluss an eine Stütze, vgl. Fig. 5, wird deutlich, welche universelle Bedeutung die neuartige Verbindung auch für Skelettkonstruktionen aus Trägern mit unterschiedlicher Höhe besitzt. Dabei spielt es keine Rolle, ob die einzelnen Träger aus unterschiedlichem Material, aus Vollholz, geleimtem Schichtholz oder aus Trägern mit zusammengesetzten Querschnitten bestehen. In allen Fällen lassen sich Träger unterschiedlicher Querschnitte niveaugleich an einer Stütze anschliessen.

Die Vereinigung von Haupt- und Nebenträgern an einer Stütze stellt kein Problem mehr dar, ebensowenig wie die Ausbildung von orthogonalen oder polygonalen Trägerrosten. Die Lasten wurden von den Trägern aus allen Richtungen unter gleichen Bedingungen eingeleitet.

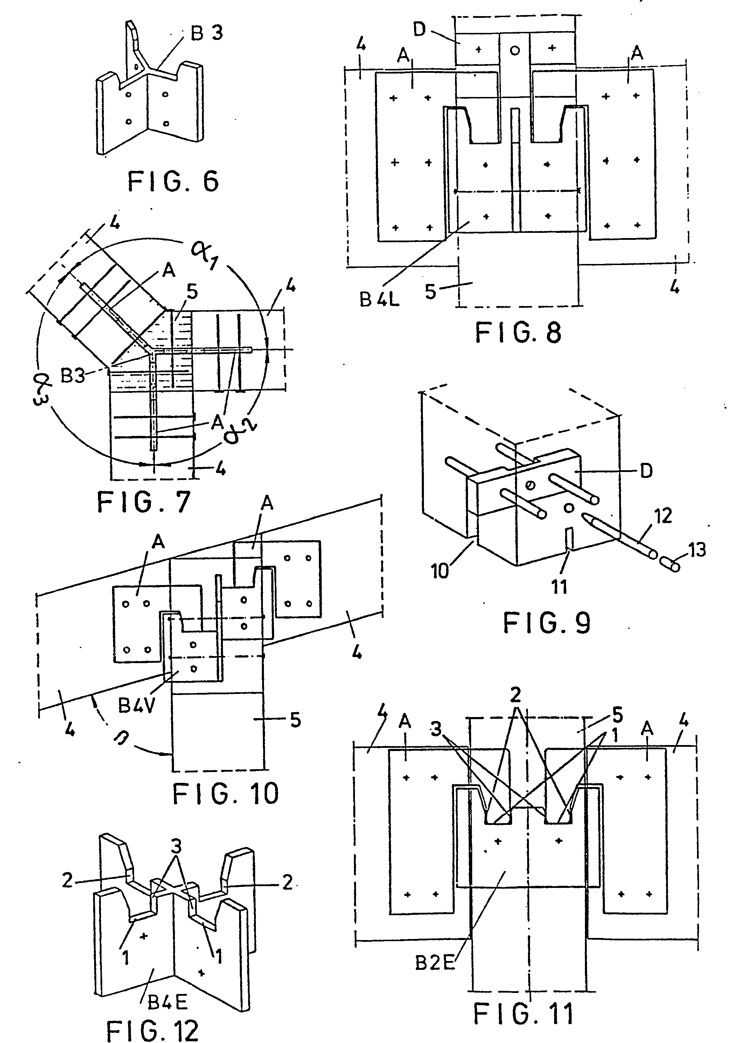

Auch die ganz aussergewöhnliche Zusammenfügung von Trägern unterschiedlicher Breite und Höhe an einem Knotenpunkt unter verschiedenen Winkeln $\alpha_1$, $\alpha_2$, $\alpha_3$ wie in Fig. 7 dargestellt, lässt sich mit Hilfe einer sternförmigen Platte B3, vgl. Fig. 6, problemlos durchführen.

Die Universalität der neuartigen Verbindung wird durch die beispielhaft herausgegriffenen, in Fig. 8 bis 13 dargestellten Anschlüsse noch weiter herausgestellt. Der in Fig. 8 dargestellte Stützenkopf an einer Kreuzungsstelle von vier Trägern 4 wird mit Hilfe der Platte B4L, die eine Lasche L besitzt, ausgeführt. In die Nut 10 des aufzusetzenden Stützenfusses greift die Lasche ein und wird mit einem Steckbolzen 12 mit einer eingelassenen, verdübelten Platte D verbunden. Die Platte B4L ist in diesem Anwendungsfall also nicht nur Widerlager für die Platten A der Träger 4, sondern darüber hinaus auch das Verbindungselement für den Stützenstoss, der in der Höhe tiefer gelegt wird als die Oberkante der Träger 4. Die Stützenfussfuge wird dadurch miteinbezogen in den Knotenpunkt und dient nicht nur der Verriegelung und der Sicherung, sondern erleichtert auch erheblich die Montage. Mit dem Tieferlegen der Stützenstossfuge sind aber auch konstruktive Vorteile verknüpft. Die Vorholzlänge für den Steckbolzen wird bei Minimierung der Laschenlänge vergrössert und der Stützenfuss gegen horizontale Kräfte aus allen Richtungen gesichert.

In Fig. 10 sind gegenüberliegende Teile der Platte B4V höhenversetzt. Dadurch entsteht eine Platte für eine um den Winkel $\beta$ um die Achse der Stütze geneigten Trägerebene.

Bei kleinem Winkel $\beta$ sind andere Formen der Platte A und B4V, als dargestellt, zweckmässig.

Fig. 11 zeigt, dass die Platte B2E auch bei einer durchgehenden Stütze 5, die eine eingeschlitzte, durchgehende Nut 10 besitzen muss, eingebaut werden kann. Die Schlitzung muss mit ausreichender Länge ausgeführt werden, um die Träger 4 einhängen zu können.

Bei einer durchgehenden Stütze mit niveaugleichem Anschluss von vier Trägern wird die Widerlagerplatte aus 2 Platten B2S mit obenliegender Ausnehmung 14 und entsprechender untenliegender Ausnehmung 15 in einem ausreichend langen Kreuzschlitz 16 erst beim Einbau zu einer Kreuzplatte B4 zusammengefügt, wie aus Fig. 17 hervorgeht.

Die Besonderheit der Platte B4E mit eingetieften, querkraftübertragenden Auflagerflächen 1 nach Fig. 12 macht es möglich, dass horizontale Kräfte von den Trägern 4 in die Stütze 5 über die Platten A und B4E, im Bedarfsfall auch Momente, übertragen werden können. Dabei ist kein Kontakt zwischen Träger und Stütze erforderlich. Deshalb wirkt sich das Schwinden des Holzes auch nicht auf die Kraftübertragung aus.

In besonders gelagerten Fällen, wenn der Anschluss gegen Abheben gesichert werden muss, sind zusätzliche Sicherungen erforderlich, wie sie beispielsweise in Fig. 14 und 15 für einen Kreuzknoten dargestellt sind. Mit der Widerlagerplatte B4 ist ein Gewindebolzen 17 verbunden, der im Kreuzungspunkt der Schlitze im Stützenkopf verläuft. Auf das Ende dieses Sicherungsbolzens wird eine Klemmplatte aufgesetzt, welche über die Enden der aus den Trägern herausragenden Platten A greift. Mit Hilfe einer Klemmplatte, beispielsweise durch das Kreuzstück 18 und der Mutter als Befestigungsmittel, werden die Plattenenden A gegen die im Stützenkopf befestigte Kreuzplatte B4 verspannt. Damit sind die Träger auch gegen abhebende Kräfte gesichert.

Diese Form der Sicherung, die ersatzweise für ähnliche Lösungen oder mechanische Sicherungen in Form von federnden Schneppern od.dgl. gelten sollen, besitzt den Vorzug, jederzeit de- und remontierbar zu sein, was bei bestimmten Anwendungen von Vorteil ist.

In Fig. 16 ist der Anschluss zweier Holzträger, ausgestattet mit nichtvorspringenden Platten der Form A, an einen durchlaufenden oder auskragenden Träger 20 dargestellt. An einer über den Träger 20 gestülpten Stahllasche 21, welche beispielsweise mit einem Bolzen od.dgl. 22 am Träger 20 befestigt ist, sind die Widerlagerplatten B1 angeschweisst, welche eine Bohrung 23 besitzen. Zur Verdeutlichung ist die in Fig. 17 übergestülpte Stahllasche 21 mit Befestigung 22 und Widerlagerplatte B1 isometrisch dargestellt. Nach Einhängung der Träger wird mittels eines Steckbolzens 24 eine Verbindung in der Weise hergestellt, dass sich die Träger vom Durchlaufträger 20 nicht abheben können.

Schliesslich ist mit der neuartigen Verbindung auch der stirnseitige Stoss von Trägern möglich, wie in Fig. 18 dargestellt. Man wird einen derartigen Stoss dann ausführen, wenn aus statisch konstruktiven Gründen es sich als zweckmässig erweist, ein Gerbergelenk auszubilden. Im Bedarfsfall kann durch einen Steckbolzen 24 od.dgl. der Einhängeträger mit der Platte A gegen unbeabsichtigtes Herausheben gesichert werden.

Alle bisher bekannten Bauteilverbindungen, namentlich die Knotenplatten, setzen voraus, dass auf der Baustelle noch Verbindungsmittel gesetzt werden müssen. Mit Hilfe der vielfältigen Formteile gelingt es, variationsreich auch im Holzskelettbau optimal vorzufertigen. Die Vorzüge der erfindungsmässigen Verbindung von Skelettbauteilen lassen sich wie folgt kurz zusammenfassen:

- Verlegung des lohnintensiven Einbaus von Verbindungsmittel in das Werk
- Vereinfachte Montage auf der Baustelle
- Leichte De- und Remontage
- Serienfertigung von Skelettbauteilen für polygonale oder orthogonale Raster-Baukastensysteme
- Kostensenkung durch schnelleren Zusammenbau
- Verwendung derselben Formteile auch beim Anschluss an Massivbauteile
- Hohe Massgenauigkeit der Bauteile und des zusammengefügten Systems
- Ausschalten des Holzschwindens bei Platten mit Druckanlageflächen 3
- Nichtbeeinflussung der Kraftübertragung
- Hoher Feuerwiderstand
- Anwendung für alle Holzquerschnitte, Profil- und Hohlquerschnitte.

Die Bedeutung der erfindungsmässigen Verbindung erstreckt sich vom kleinsten Holzquerschnitt für untergeordnete Verwendungsbereiche bis zur Holzkonstruktion hoher Tragfähigkeit, dimensioniert nach statisch, konstruktiven Gesichtspunkten. Sie erstreckt sich ferner auf Skelette aus Metall-, Kunststoff- und Stahlbetonbauteilen. Durch die reiche Ausgestaltungsvielfalt eignet sich die erfindungsmässige Verbindung vorzugsweise zur Querkraftübertragung, bedarfsweise in Kombination zur Aufnahme von horizontalen Zug- und Druckkräften, ebenso wie zur Aufnahme von Biegemomenten.

**Patentansprüche**

1. Verbindung eines Trägers (4) mit einem anderen Bauteil (4, 5), bestehend aus einer am Träger parallel zu dessen Längsrichtung und in dessen Längsachse verdrehsicher befestigten, lotrecht stehend angeordneten Platte (A) mit einem Haken, der eine im wesentlichen horizontale Auflagerfläche (1) und mindestens eine vertikale Anlagefläche (2) aufweist und aus einer am anderen Bauteil lotrecht stehend angeordneten Auflagerplatte (B), die Passflächen für den Haken der Platte (A) aufweist, dadurch gekennzeichnet, dass der Haken an seinem unteren Ende die im wesentlichen horizontale Auflagerfläche (1) und zwei vertikale Anlageflächen (2, 3) aufweist, dass die Auflagerplatte (B) lotrecht stehend mit der Hakenplatte (A) in einer Ebene liegt und Passflächen für die Auflagerfläche (1) und Anlageflächen (2, 3) des Hakens aufweist.

2. Verbindung eines Trägers (4) mit einem anderen Bauteil (4, 5), bestehend aus einer am Träger parallel zu dessen Längsrichtung und in dessen Längsachse verdrehsicher befestigten, lotrecht stehend angeordneten Platte mit einem Haken, der eine im wesentlichen horizontale Auflagerfläche (1) und mindestens eine vertikale Anlagefläche (2) aufweist und aus einer am anderen Bauteil lotrecht stehend angeordneten Auflagerplatte (B), die Passflächen für den Haken der Platte (A) aufweist, dadurch gekennzeichnet, dass der Haken an seinem unteren Ende die im wesentlichen horizontale Auflagerfläche (1) und eine in der Hakeninnenseite vertikale Anlagefläche (2) aufweist, dass die Auflagerplatte (B) lotrecht stehend mit der Hakenplatte (A) in einer Ebene liegt und Passflächen für die querkraftaufnehmende Auflagerfläche (1) und die zugkraftübernehmende Anlagefläche (2) aufweist und als Druckkraftanlagefläche die Trägerstirnflächen ausgebildet ist.

3. Verbindung eines Trägers mit einem anderen Bauteil nach Anspruch 1 oder 2, dadurch gekennzeichnet, dass die Bauteile aus Holz bestehen.

4. Verbindung eines Trägers mit einem anderen Bauteil nach Anspruch 1 oder 2, dadurch gekennzeichnet, dass Träger und Bauteil aus nicht demselben Material bestehen.

5. Verbindung eines Trägers mit einem anderen Bauteil nach Anspruch 1 oder 2, dadurch gekennzeichnet, dass die Hakeninnenseite der Platte (A) und/oder die Widerlagerplatte (B) im Anschluss an die Anlagefläche (2) eine geneigte, ebene, gebrochene oder gekrümmte Anzugsfläche aufweist und beim Zusammenfügen der Bauteile ein Schliessen stattfindet.

6. Verbindung eines Trägers mit einem anderen Bauteil nach Anspruch 1 oder 2, dadurch gekennzeichnet, dass bei Trägern aus Metall das Trägerende, entsprechend Platte (A), ausgebildet ist.

7. Verbindung eines Trägers mit einem anderen Bauteil nach einem der Ansprüche 3 bis 6, dadurch gekennzeichnet, dass die Platten (A, B) in Querschnittsmitte der Bauteile angeordnet sind.

8. Verbindung eines Trägers mit einem anderen Bauteil nach einem der Ansprüche 3 bis 6, dadurch gekennzeichnet, dass zwei oder mehr Platten (A, B) gleicher Art symmetrisch zur Querschnittsmitte angeordnet sind.

9. Verbindung eines Trägers mit einem anderen Bauteil nach Anspruch 1 oder 2, dadurch gekennzeichnet, dass die Platten (A, B, D) mittels Leim, Dübel, vorzugsweise Stabdübel, Nägel, Bolzen u.dgl. bereits im Werk in den Bauteilen befestigt werden.

10. Verbindung eines Trägers mit einem anderen Bauteil nach Anspruch 3, dadurch gekennzeichnet, dass die Verbindungsmittel zur Befestigung der Platte (B) symmetrisch bzw. zentralsymmetrisch zur Stützenachse angeordnet werden und bei orthogonalen Kreuzplatten (B4) in beiden Richtungen Verbindungsmittel laufen.

11. Verbindung eines Trägers mit einem anderen Bauteil nach einem der Ansprüche 3 oder 4, dadurch gekennzeichnet, dass die zur Befestigung von Platten (B) mit mehr als zwei Widerlagern herangezogenen stabförmigen Verbindungsmitteln ohne Spiel eingebaut sind, damit sie statisch starr in den dicken Platten eingespannt werden und eine höhere Tragfähigkeit gegen Verdrehung der Platten (B) besitzen.

12. Verbindung eines Trägers mit einem anderen Bauteil nach einem der Ansprüche 3 oder 4, dadurch gekennzeichnet, dass die Widerlagerplatte (B) in einer Stütze so eingebaut wird, dass der Schwerpunkt der horizontalen Auflagerfläche (1) über dem in der randnahesten Lage angeordneten Verbindungsmittel der Platte (B) liegt.

13. Verbindung nach Anspruch 1 oder 2, dadurch gekennzeichnet, dass die Platten (A, B, D) aus Holzwerkstoff, Kunststoff, Metall, vorzugsweise Stahl oder Aluminium, bestehen.

14. Verbindung nach Anspruch 13, dadurch gekennzeichnet, dass die Widerlagerplatte (B) in einer Stütze (5) aus mehreren Widerlagern für mehrere Platten (A) wahlweise in Kombination mit einer Lasche (L) besteht.

15. Verbindung nach Anspruch 13, dadurch gekennzeichnet, dass ein oder mehrere Widerlager der Platte (B) in der Höhe zueinander versetzt sind.

16. Verbindung eines Trägers mit einem anderen Bauteil nach Anspruch 1 oder 2, dadurch gekennzeichnet, dass eine der Platten (A oder B) mit einem Überstand (c) in den Schlitz des anderen Bauteils ragt.

17. Verbindung eines Trägers mit einem anderen Bauteil nach Anspruch 1 oder 2, dadurch gekennzeichnet, dass die Platte (B) mit mindestens einer vertikalen Lasche (L) ausgestattet ist, um die Verbindung mit der Platte (D), welche in dem darüberliegenden Stützenfuss befestigt ist, nach Einsetzen des Steckbolzens (12) einen zugfesten Stützenstoss ergibt und die eingehängten Träger gegen abhebende Kräfte verriegelt.

18. Verbindung eines Trägers mit einem anderen Bauteil nach Anspruch 1, dadurch gekennzeichnet, dass die Hakenstirn in Platte (A) und die korrespondierende Ausklinkung in der Platte (B) hohe Masshaltigkeit in der Berührfläche (1) und den beidseits anschliessenden vertikalen Anlageflächen (2 und 3) besitzen, dass ein Drehmoment von Platte (A) auf Platte (B) übertragen werden kann.

19. Verbindung eines Trägers mit einem anderen Bauteil nach Anspruch 1 oder 2, dadurch gekennzeichnet, dass zur Sicherung gegen Abheben der Träger mit der Widerlagerplatte (B) ein Bolzen (17) oder dergleichen befestigt ist und mittels eines Klemmteils, vorzugsweise eines Kreuzstücks (18) und mittels einer Gewindemutter (19) ein Festhalten der Balkenköpfe in den Widerlagerplatten bewirkt wird.

20. Verbindung eines Trägers mit einem anderen Bauteil nach Anspruch 1 oder 2, dadurch gekennzeichnet, dass am Knotenpunkt nicht gestossener Stützen die Widerlagerplatte (B) für den Anschluss von vier, sich kreuzenden Trägern aus zwei Platten besteht, dass die erste Platte (B2SO) in Plattenmitte eine obenliegende Ausnehmung (14) für die zweite Platte (B2SU) mit untenliegender Ausnehmung (15) so im Kreuzschlitz (16) der Stütze zu einer Kreuzplatte zusammengesetzt und befestigt wird, dass sie dieselbe Funktion wie eine Platte (B4) erfüllt, die nur von der Stirnseite einer Stütze aus eingebaut werden kann.

**Claims**

1. A connection of a structural part such as a beam (4) with another structural part (4, 5), comprising a first plate (A) fastened to said beam parallely to its longitudinal direction and in a torsion proof manner in its longitudinal axis, said first plate being arranged perpendicularly and having a hook with a substantially horizontal supporting area (1) and at least one vertical contact area (2), and comprising a second plate (B) being arranged perpendicularly at said other structural part and having fitting areas for said hook of said first plate (A), characterized in that said hook has at its lower end said substantially horizontal supporting area (1) and two vertical contact areas (2, 3), and in that said second plate (B) extends perpendicularly in the same plane as said first plate (A) and comprises fitting areas for said supporting area (1) and said contact areas (2, 3) of said hook.

2. A connection of a structural part such as a beam (4) with another structural part (4, 5), comprising a first plate (A) fastened to said beam parallely to its longitudinal direction and in a torsion proof manner in its longitudinal axis, said first plate being arranged perpendicularly and having a hook with a substantially horizontal supporting area (1) and at least one vertical contact area (2), and comprising a second plate (B) being arranged perpendicularly at said other structural part and having fitting areas for said hook of said first plate (A), characterized in that said hook has at its lower end said substantially horizontal supporting area (1) and a vertical contact area (2) being arranged at the inner side of said hook, and in that said second plate (B) extends perpendicularly in the same plane as said first plate (A) and comprises fitting areas for said supporting area (1) receiving vertical forces and for said contact area (2) receiving traction forces, and in that the frontal areas of said beam are formed as compressive force contact areas.

3. A connection of a beam with another structural part according to claims 1 or 2, characterized in that said structural parts consist of wood.

4. A connection of a beam with another structural part according to claims 1 or 2, characterized in that said beam and said structural part do not consist of the same material.

5. A connection of a beam with another structural part according to claims 1 or 2, characterized in that said inner side of said hook of said first plate (A) and/or said second plate (B) have subsequent to said contact area (2) an inclined, plane, broken or curved magnetic surface and locking takes place when said structural parts are attached to each other.

6. A connection of a beam with another structural part according to claims 1 or 2, characterized in that in the case of metal beams the end portion of said beam is formed according to said first plate (A).

7. A connection of a beam with another structural part according to one of the claims 3 to 6, characterized in that said plates (A, B) are arranged symmetrically to the center of said cross-section.

8. A connection of a beam with another structural part according to one of the claims 3 to 6, characterized in that two or more of said plates (A, B) of the same kind are arranged symmetrically to the center of said cross-section.

9. A connection of a beam with another structural part according to claims 1 or 2, characterized in that said plates (A, B, D) are fastened in said structural parts already in the factory by means of glue, dowels, preferably rod-shaped dowels, nails, bolts and the like.

10. A connection of a beam with another structural part according to claim 3, characterized in that said connecting means for fastening said second plate (B) are arranged symmetrically or centrosymmetrically respectively to said support axis and, where said plates are orthogonal cross plates (B4), said connecting means run in both directions.

11. A connection of a beam with another structural part according to one of the claims 3 or 4, characterized in that rod-shaped connecting means used for the fastening of said plates (B) with more than two supports are installed without slackness, so that said rod-shaped connecting means are statically rigidly held in the thick plates and have a higher supporting capacity against torsion of said plates (B).

12. A connection of a beam with another structural part according to one of the claims 3 or 4, characterized in that said second plate (B) is installed in a pillar in such a way that the center of mass of said horizontal supporting area (1) is above the connecting means of said second plate (B) arranged in the position closest to the edge.

13. A connection according to claims 1 or 2, characterized in that said plates (A, B, D) consist of wooden material, plastic material or metal, preferably steel or aluminium.

14. A connection according to claim 13, characterized in that said second plate (B) in a pillar (5) consists of several supports for several of said first plates (A), optionally in combination with a fishplate (L).

15. A connection according to claim 13, characterized in that one or several supports of said second plate (B) are staggered towards each other with regard to their level.

16. A connection of a beam with another structural part according to claims 1 or 2, characterized in that one of said plates (A or B) projects into the slot of said other structural part with a projecting length (c).

17. A connection of a beam with another structural part according to claims 1 or 2, characterized in that said plate (B) is provided with at least one vertical fishplate (L) to enable a connection with a plate (D) fastened in the pillar foot end located above it, and after the insertion of a cotter pin (12) the result is a traction resistant pillar joint and the suspended beams are locked against lifting forces.

18. A connection of a beam with another structural part according to claim 1, characterized in that the front face of said hook in said first plate (A) and the corresponding cut-out part in said second plate (B) are precisely aligned at said supporting area (1) and said subsequent vertical contact areas (2 and 3) on both sides thereof, so that a torque can be transferred from said first plate (A) to said second plate (B).

19. A connection of a beam with another structural part according to claims 1 or 2, wherein in order to secure said connection against being lifted off, said beam with said second plate (B) is fastened by a bolt (17) or the like and a retaining of the pillar top ends in said second plates (B) is effected by means of a clamping part, preferably a cross piece (18), and by means of a threaded nut (19).

20. A connection of a beam with another structural part according to claims 1 or 2, characterized in that at the junction of non-joined pillars said second plate (B) consists of two plates for the connecting of four intersecting beams, in that the first of said two plates (B2SO) has in the plate center on the top a recess (14) for the other of said two plates (B2SU) with a recess at its bottom (15), and said two plates are thus put together and fastened in the cross slot (16) of said pillar to from a crossplate, and in that said crossplate fulfills the same function as a plate (B4) which can be installed only from the front surface of a pillar.

**Revendications**

1. Liaison d'une poutre (4) avec un autre élément de construction (4, 5), constituée par une plaque (A) montée verticalement et disposée parallèlement à la direction longitudinale de la poutre et fixée de manière à ne pouvoir tourner sur son axe longitudinal, comprenant un crochet comportant au moins une surface d'appui (1) sensiblement horizontale et au moins une surface d'appui verticale (2), et par une plaque d'appui (B) montée verticalement et disposée sur l'autre élément de construction, comportant des surfaces adaptées au crochet de la plaque (A), caractérisée en ce que le crochet comprend à son extrémité inférieure la surface d'appui (1) sensiblement horizontale et deux surfaces d'appui verticales (2, 3), en ce que la plaque d'appui (B) qui est montée verticalement est disposée dans le même plan que la plaque à crochet (A) et comprend des surfaces adaptées à la surface d'appui (1) et aux surfaces d'appui (2, 3) du crochet.

2. Liaison d'une poutre (4) avec un autre élément de construction (4, 5), constituée par une plaque montée verticalement et disposée parallèlement à la direction longitudinale de la poutre, et fixée de façon à ne pouvoir tourner sur son axe longitudinal, comprenant un crochet qui comporte une surface d'appui (1) sensiblement horizontale et au moins une surface d'appui verticale (2), et par une plaque d'appui (B) montée verticalement et disposée sur l'autre élément de construction, comportant des surfaces adaptées au crochet de la plaque (A), caractérisée en ce que le crochet comprend à son extrémité inférieure la surface d'appui sensiblement horizontale (1) et une surface d'appui verticale (2) sur le côté interne du crochet, en ce que la plaque d'appui (B) est montée verticalement et disposée dans le même plan que la plaque à crochet (A) et comprend des surfaces adaptées à la surface d'appui (1) qui absorbe les forces transversales, et à la surface d'appui (2) qui transmet les forces de traction, et en ce que les surfaces frontales des poutres sont constituées sous forme de surfaces d'appui supportant les forces de pression.

3. Liaison d'une poutre avec un autre élément de construction selon la revendication 1 ou 2, caractérisée en ce que les éléments de constructions sont en bois.

4. Liaison d'une poutre avec un autre élément de construction selon la revendication 1 ou 2, caractérisée en ce que la poutre et l'élément de construction ne sont pas constitués par le même matériau.

5. Liaison d'une poutre avec un autre élément de construction selon la revendication 1 ou 2, caractérisée en ce que le côté interne du crochet de la plaque (A) et/ou la plaque de butée (B) comprend au niveau du raccord avec la surface d'appui (2) une surface de jonction inclinée, plane, en ligne brisée ou courbe, et en ce qu'un verrouillage s'établit lors de l'assemblage des éléments de construction.

6. Liaison d'une poutre avec un autre élément de construction selon la revendication 1 ou 2, caractérisée en ce que lorsqu'il s'agit de poutres en métal, les extrémités des poutres présentent une forme correspondant à celle de la plaque (A).

7. Liaison d'une poutre avec un autre élément de construction selon l'une des revendications 3 à 6, caractérisée en ce que les plaques (A, B) sont disposées au milieu de la section transversale des éléments de construction.

8. Liaison d'une poutre avec un autre élément de construction selon l'une des revendications 3 à 6, caractérisée en ce que deux ou plusieurs plaques (A, B) de même type sont disposées symétriquement par rapport au milieu de la section transversale.

9. Liaison d'une poutre avec un autre élément de construction selon la revendication 1 ou 2, caractérisée en ce que la plaque (A, B, D) est fixée déjà à l'usine aux éléments de construction au moyen de colle, de chevilles, de préférence de chevilles à tige, de clous, de boulons et analogues.

10. Liaison d'une poutre avec un autre élément de construction selon des revendication 3, caractérisée en ce que les moyens de liaison destinés à la fixation de la plaque (B) sont disposés symétriquement, ou symétriquement par rapport au centre de l'axe du support, et en ce que les moyens de liaison sont dirigés dans les deux directions lorsqu'il s'agit de plaques en croix orthogonales (B4).

11. Liaison d'une poutre avec un autre élément de construction selon l'une des revendications 3 ou 4, caractérisée en ce que les moyens de liaison en forme de barres utilisées pour la fixation de plaques (B) comprenant plus de deux butées sont insérées sans jeu de manière à être serrés rigidement et statiquement dans les plaques épaisses, et possèdent une résistance élevée s'opposant à la torsion des plaques (B).

12. Liaison d'une poutre avec un autre élément de construction selon l'une des revendications 3 ou 4, caractérisée en ce que la plaque de butée (B) est incorporée dans un support de manière que le centre de gravité de la surface d'appui horizontale (1) soit disposé sur le moyen de liaison de la plaque (B) qui est dans la position la plus proche du bord.

13. Liaison selon la revendication 1 ou 2, caractérisée en ce que les plaques (A, B, D) sont constituées en une matière à base de bois, en une matière synthétique ou en métal qui est de préférence de l'acier ou de l'aluminium.

14. Liaison selon la revendication 13, caractérisée en ce que la plaque de butée (B) est montée dans un support (5) et comprend plusieurs butées destinées à plusieurs plaques (A), éventuellement en combinaison avec une platte (L).

15. Liaison selon la revendication 13, caractérisée en ce qu'une ou plusieurs butées de la plaque (B) sont décalées en hauteur les unes par rapport aux autres.

16. Liaison d'une poutre avec un autre élément de construction selon la revendication 1 ou 2, caractérisée en ce que l'une des plaques (A, B) pénètre sur une distance «c» dans la fente de l'autre élément de construction.

17. Liaison d'une poutre avec un autre élément de construction selon la revendication 1 ou 2, caractérisée en ce que la plaque (B) est équipée d'au moins une platte verticale (L) de manière que la liaison avec la plaque (D) qui est fixée dans le pied d'appui situé au-dessus détermine une butée de support fixe par l'emploi d'un boulon d'enfichage (12), et verrouille les poutres suspendues de manière à les retenir vis-à-vis de forces susceptibles de les soulever.

18. Liaison d'une poutre avec un autre élément de construction selon la revendication 1, caractérisée en ce que la partie frontale du crochet de la plaque (A) et l'encoche correspondante de la plaque (B) présentent une précision élevée de leurs dimensions au niveau de la surface de contact (1) et des surfaces d'appui verticales (2 et 3) qui lui sont raccordées des deux côtés, de manière qu'un mouvement de rotation puisse être transmis de la plaque (A) à la plaque (B).

19. Liaison d'une poutre avec un autre élément de construction selon la revendication 1 ou 2, caractérisée en ce que pour éviter le soulèvement des poutres, un boulon (17) ou analogue est fixé à la plaque de butée (B) et détermine la retenue de la tête de la poutre dans la plaque de butée au moyen d'un élément de serrage, et de préférence d'un élément en croisillon (18) et d'un écrou fileté (19).

20. Liaison d'une poutre avec un autre élément de construction selon la revendication 1 ou 2, caractérisée en ce qu'au point d'assemblage de supports longs aboutés, la plaque de butée (B) destinée au raccordement de quatre poutres se croisant est constituée par deux plaques, en ce que la première plaque (B2SO) comprend dans son centre un évidement (14) disposé sur la partie supérieure et destinée à la seconde plaque (B2SU) comprenant un évidement (15) disposé sur sa partie inférieure et sont rassemblées sous forme d'une plaque en croix dans la fente en croix (16) du support et est fixée de manière qu'elle puisse remplir la même fonction qu'une plaque (B4), qui ne peut être introduite dans un support que par le côté frontal.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 16

FIG. 15

FIG. 17

FIG. 18

15